# EUROPEAN PATENT SPECIFICATION

(11) **EP 1 550 632 B1**
(45) Date of publication and mention of the grant of the patent: **13.09.2006**
(21) Application number: 03738616.6
(22) Date of filing: 01.07.2003
(51) Int. Cl.: B82B 1/00, B82B 3/00, B22F 1/00, B22F 9/24

(54) **NOBLE METAL NANOTUBE AND METHOD FOR PREPARATION THEREOF**
EDELMETALLNANORÖHRE UND HERSTELLUNGSVERFAHREN DAFÜR
NANOTUBE EN METAL NOBLE ET SON PROCEDE DE PREPARATION

(30) Priority: 03.07.2002 JP 2002194693
(43) Date of publication of application: 06.07.2005
(73) Proprietor: Japan Science and Technology Agency, Kawaguchi-shi, Saitama 332-0012 (JP)
(72) Inventor: KIJIMA, Tsuyoshi, Miyazaki-Shi, Miyazaki 889-2153 (JP)
(74) Representative: Vossius & Partner
(86) International application number: PCT/JP2003/008369
(87) International publication number: WO 2004/005182

(56) References cited:
- JP-A- 8 325 195
- MARTIN C R ET AL: "Controlling ion-transport selectivity in gold nanotubule membranes" ADV MATER; ADVANCED MATERIALS SEP 14 2001, vol. 13, no. 18, 14 September 2001 (2001-09-14), pages 1351-1362, XP001129375
- OSHIMA Y. ET AL.: 'Evidence of a single-wall platinum nanotube' PHYSICAL REVIEW B vol. 65, no. 12, 15 March 2002, pages 121401-1 - 121401-4, XP002973913 121401(R)
- WANG B. ET AL.: 'Novel structures and properties of gold nanowires' PHYSICAL REVIEW LETTERS vol. 86, no. 10, 05 March 2001, pages 2046 - 2049, XP002973914
- KONDO Y., TAKAYANAGI K.: 'Synthesis and characterization of helical multi-shell gold nanowires' SCIENCE vol. 289, no. 5479, 28 July 2000, pages 606 - 608, XP002973915
- LI YD. ET AL.: 'Bismuth nanotubes: A rational low-temperature synthetic route' JOURNAL OF THE AMERICAN CHEMICAL SOCIETY vol. 123, no. 40, 10 October 2001, pages 9904 - 9905, XP002973916
- JANA NR. ET AL.: 'Seed-mediated growth approach for shape-controlled synthesis of spheroidal and rod-like gold nanoparticles using a surfactant template' ADVANCED MATERIALS vol. 13, no. 18, 14 September 2001, pages 1389 - 1393, XP001129383

## Description

### TECHNICAL FIELD

The present invention relates to a new metal having a nanotube structure which mainly consists of a noble metal element which can be used as various catalysts for chemical reactions in industrial and environmental fields of such as fuel-cell catalyst and automotive exhaust catalyst, various electrodes for electrochemical reactions such as electrolysis electrode, base materials or functional elements for photonics/electronics/information technologies such as temperature, pressure, gas sensor elements, paste for manufacturing electro electronics devices, electrical resistive elements for electronic parts, permanent magnet, components of a microreactor, and substance-storing material, utilizing the chemical, electrochemical and magnetic characteristics of the noble metal element.

### BACKGROUND OF THE INVENTION

Noble metal elements have excellent workability, heat resistance, oxidation resistance, corrosion resistance, electrochemical characteristics, and, resulting from its d electrons, unique magnetic property and spectrographic and chemical properties so that noble metal elements have been widely used as, for example, decorative materials, materials for laboratory equipments such as crucible, electrical industrial materials such as thermoelectric couple and electric contact, electronic industrial materials such as paste, catalysts, non-dissolvable electrodes, and high performance magnets. It is known that these functions and performance sensitively depend on the composition and structure of mother body, as seen in catalyst characteristic. Recently, the nanostructure has gotten increase of attention. It is expected that by dividing a composition containing a metal element or metal ion into dot-like, lot-like, wire-like, or tubular microscopic tissues as small as molecular scale or nanometer level, called nanostructure, the composition specifically develops functions such as catalyst characteristics, electrochemical characteristics, and magnetic characteristics containing quantum effect ["Understanding Nanotechnology" by Tomoji Kawai as supervising editor, II-IV chapters, edited by Kogyo Chosakai Publishing, Inc. (2001); Nikkei Science December issue, 16-94 (2001)].

As for porous material having honeycomb or three-dimensional network pores as small as nanometer scale, Mobil Corporation succeeded in producing mesoporous silica having honeycomb mesopores of 2-8 nm using surfactant as the template in 1992 [C. T. Kresge and four other researchers, Nature, 359 p710-712 (1992)]. After that, a variety of mesoporous materials of various skeleton components such as metal oxides other than silica and sulfide have been synthesized in the similar manner one after another [Tsuyoshi Kijima and one other researcher, J. Soc. Inorg. Mater, 8, p3-16 (2001)]. Around the same time, a researcher group including inventors of the present invention obtained a hexagonal structured mesoporous rare-earth oxide by using dodecyl sulfate ions as the template to prepare a complex synthesized in homogeneous precipitation method using urea, and exchanging the ions of the template with acetate ions [M. Yada and three other researchers, Inorg. Chem, 37, 6470-75 (1998), Angew. Chem. Int. Ed, 38, 3506-09 (1999)].

Production of mesoporous metals aiming for applications to capacitor has been conducted by the similar template synthesis manner [Yoshiaki Fukushima, Ceramics 36, 917-919 (2001)]. First, granular mesoporous platinum having pores on the order of 3 nm was synthesized by using micelle of nonionic surfactant as the template and reducing chloroplatinic acid with hydrazine or the like [G. S. Attard and four other researchers, Angew. Chem. Int. Ed, 36, 1315-1317 (1997)]. Further, by electrodepositing micelle liquid crystals with metallic salt and surfactant, membranous mesoporous platinum [G. S. Attard and five other researchers, Science, 278, 838-840 (1997)] and membranous mesoporous tin [A. H. Whitehead and three other researchers, Chem. Comm, 331-332 (1999)] have been also produced. Mesoporous platinum and gold (Au) having pores of about 70 nm diameter was obtained by using aluminium oxide anode film as the template [H. Masuda and one other researcher, Science, 268, 1466-1468 (1995)], and porous gold (Au) was obtained by using polystyrene latex as the template [O. D. Velev and three other researchers, Nature, 401, 548 (1999)]. Mesoporous platinum having a specific surface area of 47 m²/g was synthesized in a method using supercritical CO₂ as solvent and graphite crystallite as the template [H. Wakayama and one other researcher, Chem. Comm. 391-392 (1999)].

On the other hand, structure in which particles have hollow cylindrical configuration of which outer diameter is several nm to several hundred nm and inner diameter is a few tenths of one nm to several dozen nm is called "nanotube". It is known there are natural nanotube-like structures. Examples are silicate minerals such as chrysotile and imogolite. It was reported that these have nanotube structure.

First one of artificial inorganic nanotubes is a carbon nanotube discovered as deposited matters during arc discharge in 1991 [S. Iijima, Nature, 364, p56-58 (1991)]. Since this discovery, there have been many reported synthesis examples of nanotubes of nitrides such as boron nitride and B-C-N by similar high temperature reaction [E. J. M. Hamolton and five other researchers, Science, 260, p659 (1993)] and nanotube of sulphides such as tungsten sulfide [R. Tenne and three other researchers, Nature 360, p444 (1992)] and molybdenum sulfide [Y. Feldman, Science, 267, p222 (1995)].

Moreover, as a result that the aforementioned template-synthetic method has been also applied to the synthesis of inorganic nanotubes, there have been recently many reported nanotubues of oxides such as vanadium oxide [M. E. Spahr and five other researchers, Angew. Chem. Int. Ed, 37, p1263-65 (1998)], silica [M. Adachi and two other researchers, Langmuir, 15, 7097 (1999)], and titania [H. Imai and four other researchers, J. Mater. Chem, 9, 2971 (1999)]. Recently, a researcher group including the inventors of the present invention succeeded in synthesizing a rare-earth oxide nanotube by extensively applying reaction conditions of the homogeneous precipitation method using urea and using dodecyl sulfate ions as the template [M. Yada and four other researchers, Adv. Mater, 14, 309-313 (2002)].

As for noble metals, a method of forming metal tubes passing through a film by two-stage electroless plating reaction using, as the template, a porous polycarbonate film filter obtained by track etching has been developed by researchers including C. R. Martin [C. R. Martin, Science, 266, 1961-1966 (1994); S. B. Lee and one other researcher, Chem. Mater, 13, 3236-3244 (2001)] and a gold nanotube having substantially uniform inner diameter not smaller than about 1 nm has been obtained [C. R. Martin and three other researchers, J. Phys. Chem. B, 105, p11925-11934 (2001); K. B. Jirage and two other researchers, Anal. Chem, 71, 4913-4918 (1999)]. In similar method, a palladium nanotube of 4-5 nm in thickness have been produced [V. Badri and one other researcher, Int. J. Hydrogen Energy, 25, 249-253 (2000)]. As mentioned above, according to the method developed by Martin et al., a metal nanotube having outer diameter corresponding to the pore diameter (10 nm or more) of polymer membrane as the template and having thickness of several nm or more can be obtained. However, there have been only two kinds of metal nanotubes, i.e. gold and palladium, reported as obtained according to this method. In addition, the structure of the obtained metal nanotubes is defined by pore diameter (10 nm or more) of the polymer membrane so that the outer diameter must be 10 nm or more corresponding to the pore diameter (10 nm or more) and the thickness must be several nm or more.

C.R. Martin et al. in Adv.Mat., 2001, 13, n°18, pp. 1351-1362 disclose the production of An nanotubes with a range of possible internal diameters.

That is, there is no suggestion about the structure of about 5-7 nm in outer diameter, about 2-4 nm in inner diameter, 1-2 nm in thickness, 10 nm or more in length as defined by the present invention. The structure of the above metal nanotubes is different from the structure as defined by the present invention.

On the other hand, to best exhibit the activity of a catalyst and the performance of an electrode as intrinsic functions of noble metal, it is desired to have a microscopic structure of at least 2-3 nm in inner diameter and about 2 nm or less in thickness as you must easily understand from the conventional knowledge about nanostructure [M. Ichikawa, Platinum Metals Rev, 44, 3-14 (2000)]. However, it is difficult to achieve this according to the method discovered by Martin et al. In fact, there have been no reported previous cases of such thin metal nanotube. Conventional techniques regarding noble metals other than the above remain provision of spherical or amorphous ultrafine particles in addition of granular or membranous porous metals having honycomb or three-dimensional network pores as small as nanometer scale.

The present invention aims to provide a nanotube having novel composition, novel size, and novel properties different from the nanotubus as stated above as prior arts, with the wide-ranging reports of research and the prior arts about the nanotubes in mind. Specifically, according to the present invention, a nanotube is structured to have a skeleton made of single noble metal element or a mixture of a plurality of metal elements including a noble metal element and have a thin nanotuble configuration of 2-3 nm in inner diameter and 1.5 nm or less in thickness, thereby providing a nanotube having novel composition, organization, and structure containing a noble metal element and excellent characteristics resulting from the element. In this manner, the present invention aims to provide a nanotube having oxidation resistance, corrosion resistance, electrochemical characteristics, and catalytic property as intrinsic functions of noble metal and, in addition, specifically exhibits chemical, magnetic, and optical excellent functions resulting from the electronic structure and skeleton configuration. By using this nanotube, the present invention further aims to provide novel material contributing to technical innovation in chemical, electrical, information, environmental, and biotechnology fields.

As reported cases related to noble metal nanotube obtained by another method besides the electroless plating reaction method using a porous polycarbonate film filter as the template as discovered by Martin et al., there are two examples: a granular mesoporous platinum [G. S. Attard and four other researchers as mentioned above, Angew. Chem. Int. Ed, 36, 1315-1317 (1997)] and a membranous mesoporous platinum [G. S. Attard and five other researchers as mentioned above, Science, 278, 838-840 (1997)]. These can be obtained as porous noble metals having pore diameter about 3 nm, by using micelle of nonionic surfactant as the template and reducing chloroplatinic acid with hydrazine or the like or by electrodepositing micelle liquid crystals with metallic salt and surfactant. However, there is no disclosure or description about nanotube comprising particles having hollow cylindrical configuration of which outer diameter is several nm to several hundred nm and inner diameter is a few tenths of one nm to several dozen nm and that noble metal is introduced or can be introduced as basic skelton.

As regard to this point, the same is true in other prior documents.

Taking into consideration that nanotubes of metal oxides such as silica and zirconia are obtained by the synthetic method relating to the template synthesis of nanoporous structure from the same skeleton component, it is suggested that it is required for achieving noble metal nanotubes to push past the limits of the current synthetic method. On the other hand, it is well known that as two kinds of surfactants having different hydrophilic group structures are mixed, the surface tension and the critical micelle concentration (CMC) are reduced in comparison with the single kind case so as to exhibit a synergistic effect such as improving emulsion property and foaming property and these are utilized as practical materials such as detergent [Manabu Senoo and one other researcher, Chemistry and applications of surfactants, Dainippon-tosho, Chapter 4 (1995)].

However, there have been no previous cases of applying such complex effects to the template synthesis. In synthesis of nanoporous structure and inorganic nanotube using surfactant as template, either case uses single kind of surfactant as the template agent. The researcher group including inventors of the present invention recently found that wire-like silver bromide and tin oxide of about 1 µm in diameter are obtained by using, as reaction field, nematic liquid crystal obtained by mixing nonionic surfactant and cationic surfactant and obtained knowledge that the mixed surfactant has effect on synthesis of nanostructure [T. Kijima and three other researchers, Langmuir (2002) being at press].

### DISCLOSURE OF THE INVENTION

As a result of earnest studies about the kind of metal source and surfactants to be used and reaction condition for the purpose of achieving the production of noble metal nanotube by template synthesis based on the mixture of surfactants, the inventors ascertained that by a reaction of reducing noble metal components which was previously added in molecular organization obtained by mixing two kinds of components: a nonionic surfactant having relatively small hydrophilic part or an ionic surfactant and a nonionic surfactant having relatively large hydrophilic part, nanotube particles of which skeleton is made of noble metal can be grown.

That is, as a result of earnest studies, the inventors succeeded in solving and achieving the aforementioned object by inventions implementing the technical features described as follows.

That is, the first invention is (1) a noble metal nanotube, wherein the skeleton of noble metal nanotube is made of a single noble metal element of gold (Au), silver (Ag), platinum (Pt), palladium (Pd), rhodium (Rh), or iridium (Ir) as noble metal elements and wherein the noble metal nanotube has a tubular form of about 5-7 nm in outer diameter, 2-4 nm in inner diameter, about 1-2 nm in thickness, and 10 nm or more in length.

The noble metal nanotube disclosed herein is a nanotubue compound having skeleton structure forming the basis of nanotubes as defined in the following (2) and (3). The noble metal nanotubes as defined in the following (2) and (3) are derived from the noble nanotube as defined in the above (1).

That is, the nanotubue of (2) or (3) is a nanotube similar to the noble metal nanotube of (1) except that the skeleton is made of an organization in which two or more elements selected from a group consisting of the noble metal elements described in (1) and ruthenium (Ru), or one or more elements selected from a group consisting of the noble metal elements described in (1) and ruthenium (Ru) and one or more elements selected from a group consisting of base metal elements such as nickel (Ni) are mixed in any proportions.

That is, the second invention is (2) a noble metal nanotube, wherein the skeleton of the noble metal nanotube is made of an organization in which two or more selected from a group consisting of gold (Au), silver (Ag), platinum (Pt), palladium (Pd), rhodium (Rh), iridium (Ir), and ruthenium (Ru) as noble metal elements are mixed in any proportions and wherein the noble metal nanotube has a tubular form of about 5-7 nm in outer diameter, about 2-4 nm in inner diameter, about 1-2 nm in thickness, and 10 nm or more in length.

The third invention is (3) a noble metal nanotube, wherein the skeleton of the noble metal nanotube is made of an organization in which one or more elements selected from a group consisting of gold (Au), silver (Ag), platinum (Pt), palladium (Pd), rhodium (Rh), iridium (Ir), and ruthenium (Ru) and one or more elements selected from a group of base metals such as nickel (Ni) are mixed in any proportions and wherein the noble metal nanotube has a tubular form of about 5-7 nm in outer diameter, about 2-4 nm in inner diameter, about 1-2 nm in thickness, and 10 nm or more in length.

The following fourth through sixth inventions disclose producing methods of the noble metal nanotubes of the aforementioned first through third inventions.

That is, the fourth invention is (4) a producing method of a noble metal nanotube as described in the above (1), wherein the skeleton of the noble metal nanotube is made of a single noble metal element of gold (Au), silver (Ag), platinum (Pt), palladium (Pd), rhodium (Rh), or iridium (Ir) as noble metal elements and the noble metal nanotube has a tubular form of about 5-7 nm in outer diameter, about 2-4 nm in inner diameter; about 1-2 nm in thickness, and 10 nm or more in length, the method comprising preparing a reaction mixture of one metal salt or metal complex compound selected from a group of noble metal salts and noble metal complex compounds such as nitrate salts, chlorides, and metal oxides of gold (Au), silver (Ag), platinum (Pt), palladium (Pd), rhodium (Rh), and iridium (Ir) as noble metal elements; two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotubue, and collecting the noble metal nanotube.

The fifth invention is (5) a producing method of a noble metal nanotube as described in the above (2), wherein the skeleton of the noble metal nanotube is made of an organization in which two or more selected from a group consisting of gold (Au), silver (Ag), platinum (Pt), palladium (Pd), rhodium (Rh), iridium (Ir), and ruthenium (Ru) as noble metal elements are mixed in any proportions and the noble metal nanotube has a tubular form of about 5-7 nm in outer diameter, about 2-4 nm in inner diameter, about 1-2 nm in thickness, and 10 nm or more in length, the method comprising preparing a reaction mixture of two or more metal salts or metal complex compounds selected from a group of noble metal salts and noble metal complex compounds such as nitrate salts, chlorides, and metal oxides of gold (Au), silver (Ag), platinum (Pt), palladium (Pd), rhodium (Rh), iridium (Ir), and ruthenium (Ru) as noble metal elements; two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotube, and collecting the noble metal nanotube.

The sixth invention is (6) a producing method of a noble metal nanotube as described in the above (3), wherein the skeleton of the noble metal nanotube is made of an organization in which one or more elements selected from a group consisting of gold (Au), silver (Ag), platinum (Pt), palladium (Pd), rhodium (Rh), iridium (Ir), and ruthenium (Ru) and one or more elements selected from a group of base metals such as nickel (Ni) are mixed in any proportions and the noble metal nanotube has a tubular form of about 5-7 nm in outer diameter, about 2-4 nm in inner diameter, about 1-2 nm in thickness, and 10 nm or more in length, the method comprising preparing a reaction mixture of one or more metal salts or metal complex compounds selected from a group of noble metal salts and noble metal complex compounds such as nitrate salts, chlorides, and metal oxides of gold (Au), silver (Ag), platinum (Pt), palladium (Pd), rhodium (Rh), iridium (Ir), and ruthenium (Ru) as noble metal elements; one or more base metal salts selected from a group of metal salts such as nitrate salts and chlorides of base metal elements such as nickel (Ni); two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotube, and collecting the noble metal nanotube.

The following seventh through fifteenth inventions disclose use inventions of the noble metal nanotubes of the first through third inventions.

That is, the seventh invention is (7) a functional material containing one or more noble metal nanotube(s) as described in the above (1)-(3), wherein the functional material is used for applications based on the properties of the noble metal nanotube(s).

The eighth invention is (8) a functional material as described in the above (7), wherein the functional material is mainly used for application as a catalyst for fuel cell, automobile exhaust, or the like.

The ninth invention is (9) a functional material as described in the above (7), wherein the functional material is mainly used for application as an electrode for electrolysis or the like.

The tenth invention is (10) a functional material as described in the above (7), wherein the functional material is mainly used for application as a sensor or a shape-memory sensor for detecting temperature, pressure, humidity, dew condensation, flow rate, wind velocity, light, gas, oxygen concentration or displacement.

The eleventh invention is (11) a functional material as described in the above (7), wherein the functional material is mainly used for application as paste.

The twelfth invention is (12) a functional material as described in the above (7), wherein the functional material is mainly used for application as an electric wiring material, an electrical resistive material, or a capacitor.

The thirteenth invention is (13) a functional material as described in the above (7), wherein the functional material is mainly used for application as permanent magnet.

The fourteenth invention is (14) a functional material as described in the above (7), wherein the functional material is mainly used for application as a component of a microreactor.

The fifteenth invention is (15) a functional material as described in the above (7), wherein the functional material is mainly used for application as a substance-storing material.

### BRIEF DESCRIPTION OF THE DRAWINGS

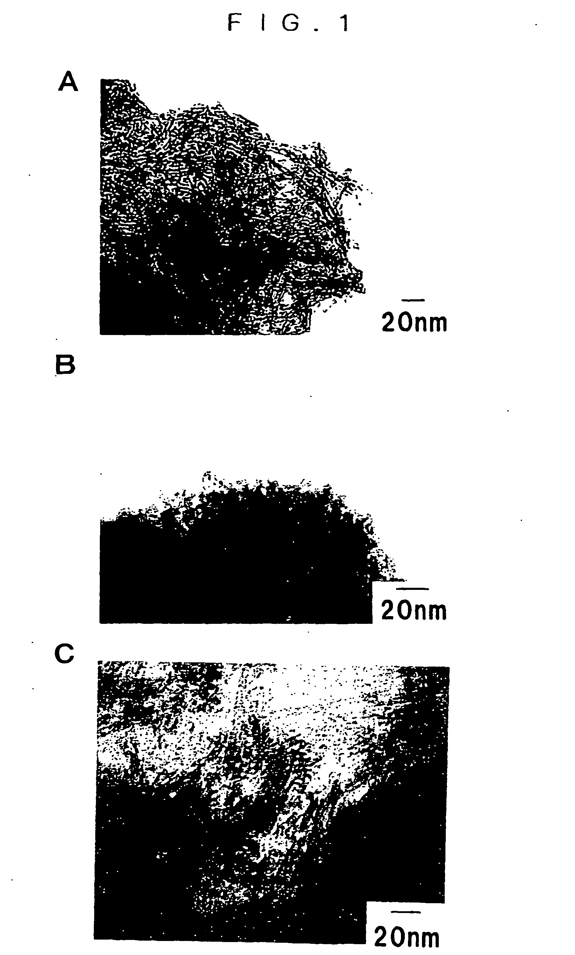

Figs. 1(A)-1(G) are observation views of nanotubes of the present invention taken by a transmission electron microscope, wherein Fig. 1(A) is an observation view of a platinum nanotube obtained in Example 1, taken by the transmission electron microscope, Fig. 1(B) is an observation view of a palladium nanotube obtained in Example 2, taken by the transmission electron microscope, and Fig. 1(C) is an observation view of a silver nanotube obtained in Example 3, taken by the transmission electron microscope.

### BEST MODE FOR CARRYING OUT THE INVENTION

The invention of this application has the aforementioned features and, hereinafter, examples will be specifically described with reference to attached drawings and tables. These disclosed examples are for the purpose of disclosure of aspects of the present invention and are not intended to limit the scope of the present invention. That is, the present invention aims to provide a thin metal nanotube structured from noble metal element(s) as major ingredient as mentioned above. As for the ingredients and structure, the nanotube has specific size and is composed of a skeleton made of one or more kinds of noble metal elements or of such noble metals as major ingredient and base metal elements as accessory ingredients. Examples of the ingredient include so many blends because both the major ingredient and the accessory ingredient allow many combinations in composition and, in addition, another kind of metal element can be easily introduced into the skeleton organization by mercurifying operation or the like.

The outline of producing method is reducing metal salt by using, as template, a structure obtained by mixing at least two kinds of surfactants and metal salt solution under proper condition so as to lead a nanotube of specific size. The proper temperature and mixing condition for establishing the template vary depending on the kind of metal as the subject and the properties of the surfactants to be used. Therefore, the following examples are only for the purpose of illustrating embodiments of the present invention and the metal kind and the producing method of the present invention should not be limited by these examples.

Figs. 1(A), 1(B), and 1(C) are observation micrographs of noble metal nanotubes of the present invention, taken by a transmission electron microscope. From these micrographs, it can be seen that the noble metal organizations of the present invention have hollow tubular structure of which thickness is very small.

### EXAMPLES

### EXAMPLE 1

Nonaethylene glycol monododecyl ether (C₁₂EO₉) was dropped into aqueous solution of chloroplatinic acid (H₂PtCl₆) taken in a test tube and was heated to 60°C. Further, polyoxyethylene (20) sorbitan monostearate (tween60, trade name; available from Wako Pure Chemical Industries, Ltd.) was added. After the test tube was shaken in water bath of 60°C for three minutes, the test tube was left in air constant-temperature bath of 25°C for two minutes. This procedure was repeated three times.

The test tube was left at 25°C for twenty minutes, thereby preparing reaction mixture of feeding molar ratio H2PtCl₆:C₁₂EO₉:tween60:H₂O = 1:1:1:60. Hydrazine of which molar ratio was 16 times as much as the chloroplatinic acid was dropped into the reaction mixture at the same temperature and was reacted for 24 hours. Fine solid phase deposition was centrifuged, after that, washed with water, then washed with ethanol, and dried, thereby obtaining black powder.

The powder was observed by the transmission electron microscope and it was confirmed that the major product of the powder was tubular particle of about 6 nm in outer diameter, 3 nm in inner diameter, and 1.5 nm in thickness [Fig. 1(A)].

### EXAMPLE 2

Nonaethylene glycol monododecyl ether (C₁₂EO₉) was dropped into aqueous solution of palladium chloride (PdCl₂) taken in a test tube and was heated to 60°C. Further, polyoxyethylene (20) sorbitan monostearate (tween60, trade name; available from Wako Pure Chemical Industries, Ltd.) was added. After the test tube was shaken in water bath of 60°C for 15 minutes, the test tube was cooled to 25°C and left at this temperature for twenty minutes, thereby preparing reaction mixture of feeding molar ratio PdCl₂:C₁₂EO₉:tween60:H₂O = 1:1:1:60. Hydrazine of which molar ratio was 16 times as much as the palladium chloride was dropped into the reaction mixture at the same temperature and was reacted for 24 hours.

Fine solid phase deposition was centrifuged, after that, washed with water, then washed with ethanol, and dried, thereby obtaining black powder.

The powder was observed by the transmission electron microscope and it was confirmed that the major product of the powder was tubular particle of about 6 nm in outer diameter, 3 nm in inner diameter, and 1.5 nm in thickness [Fig. 1(B)].

### EXAMPLE 3

Sodium dodecylsulfate (SDS) was added to 0.056M nitric acid solution of silver nitrate (AgNO₃) taken in a test tube and was heated to 60°C so as to obtain uniform solution. Further, polyoxyethylene (20) sorbitan monostearate (tween60, trade name; available from Wako Pure Chemical Industries, Ltd.) was added to the solution. After the test tube was shaken for ten minutes, the test tube was cooled to 25°C, thereby preparing reaction mixture of feeding molar ratio AgNO₃:SDS:tween60:H₂O (0.056M HNO₃) = 1:1:1:60. Hydrazine of which molar ratio was 16 times as much as the silver nitrate was dropped into the reaction mixture at the same temperature and was reacted for 24 hours. Fine solid phase deposition was centrifuged, after that, washed with water, then washed with ethanol, and dried, thereby obtaining gray powder.

The powder was observed by the transmission electron microscope and it was confirmed that the major product of the powder was tubular particle of about 7 nm in outer diameter, 4 nm in inner diameter, and 1 nm in thickness [Fig. 1(C)].

As a result of making continuous experiments in addition to the above examples and checking the obtained data, it is confirmed that the present invention provides a noble metal nanotube as defined in the above (1). Moreover, it becomes apparent that the noble metal nanotubes as defined in the above (2) and (3) can be derived from the noble metal nanotubue as defined in the above (1).

As a result of this, the present invention provides a noble metal element compound of a single noble metal element, an alloy, or intermetallic compound which can exhibit several functions such as oxidation resistance, corrosion resistance, electrochemical characteristics, and catalytic property resulting from intrinsic electronic structure of noble metal because the present invention uses noble metal element as nanotube component as apparent from the mention at the beginning of this specification and the reports in many documents and which is very novel because it is very thin and has a nanotube structure. The noble metal element compound can be expected as excellent functional material to be used in various technical fields.

We have no doubt whatsoever that the present invention is of great significance because the present invention is the success of development and production of nanotuble compound of specific hollow configuration having a noble metal element. The disclosure of specific data relating to the detailed properties, characteristics, and functional effects in various technical fields, and new technical feasibility and expansibility resulting from these properties and effects greatly depend on and are left to the future research and development. From the composition and nanotube structure, the possibility of exhibiting excellent functional effects in various technical fields must be extremely great.

That is, the present invention successfully provides a nanotube structure which has various effective functions such as excellent catalytic property, electrode property for electrochemical reaction, various sensor properties, resistance/magnetic properties, microreactor function, and selective adhesive property to certain molecules resulting from the unique configuration and the very thin and broad specific surface of the noble metal, and which can be used for various applications which are very important for industry and environmental protection such as fuel-cell catalyst, automotive exhaust catalyst, petrochemical catalyst, and base materials or functional elements for photonics/ electronics/information technologies.

Though the producing method of noble metal nanotube is disclosed by specifically and individually describing the aforementioned examples, the reaction conditions in the producing method in case of carrying out the preparation of a reaction mixture will be described and summarized as follows.

First, as the producing method, there are a type (1) of preparing a reaction mixture of one or more noble metal salts or noble metal complex compounds selected from a group of nitrate salts, chlorides, and metal oxides of gold, silver, platinum, palladium, rhodium, iridium and the like; two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol (claims 1 and 4), or a type (2) previously adding a predetermined amount of noble metal salt or noble metal complex compound or base metal salt of a kind different from the above into the reaction mixture (claims 2, 3, 5, and 6) and, after that, adding reducing agent such as hydrazine into the reaction mixture or irradiating the reaction mixture with light to cause reaction.

The reaction conditions will be illustratively described as follows.

The description will be made as regard to nanotube of which noble metal component is platinum or palladium. As the reaction operation and reaction condition from preparation of a reaction mixture to taking of final product will be illustratively disclosed as follows: first, a stage of preparing a reaction mixture is conducted by adding nonaethylene glycol dodecyl ether as the first surfactant in an amount of 1-3 moles, preferably one mole, and water in an amount of 40-80 moles, preferably, 60 moles relative to one mole of chloroplatinic acid or palladium chloride to have a predetermined mixing molar ratio among required components; shaking and mixing them at 60-70°C for one hour; then, adding polyoxyethylene (20) sorbitan monostearate (tween60, trade name; available from Wako Pure Chemical Industries, Ltd.) as the second surfactant in an amount of 1-3 moles, preferably one mole; shaking them for 2-30 minutes; repeating a procedure 1-10 times, preferably 3-4 times, consisting of shaking them for 2-10 minutes in atmosphere directly or in water bath of 60°C and leaving them for 2-3 minutes at 0-30°C preferably 10-25°C; after that, cooling them sufficiently to 10-30°C, preferably 20-25°C; dropping hydrazine in an amount of 1-30 moles per one mole of chloroplatinic acid; and keeping them at the same temperature for 24 hours.

Though the above description was made about the reaction operation and reaction condition in case of obtaining nanotubes of platinum, palladium, and silver elements, nanotubes of other noble metal elements are also obtained by procedures and conditions equal or similar to the aforementioned reaction operation and reaction condition.

That is, it is required to adjust the molar ratio of the reaction mixture to a constant molar ratio range as much as possible, and to carry out the operation of mixing surfactants into the reaction mixture in two separate stages, i.e. one for mixing the first surfactant and the other for mixing the second surfactant, under a relatively warm temperature condition of 60-70°C.

In the second stage, it is required to conduct reaction temperature maintenance suitable for the respective reaction system, by cooling the reaction mixture directly to 25°C or lower after shaking the reaction mixture suitably or by repeating the heating operation and cooling operation several times during the shaking of the reaction mixture suitably and, after that, cool the reaction mixture to 25°C or lower.

At this time, it is impossible to rationalistically explain the reason why cooling operation is required during the heating operation of reaction mixture in case of platinum group. Anyway, it is ensured that noble metal nanotube can be produced according to the aforementioned temperature cycle. The reason mentioned above including the braekthrough of reaction mechanism is now under study or depends on future study.

As apparent from the above examples, the same reaction conditions mentioned above can not be applied to any noble metal element. It should be understood that the reaction conditions slightly vary depending on the kind of noble metal element. It should be easy to determine proper conditions on the basis of the disclosed conditions relating to platinum, palladium; and silver.

That is, it is ordinary way for a person skilled in the art to search and determine proper conditions for other noble metal elements by experiments on the basis of the aforementioned examples. The conditions are natural way for carrying out the present invention and products according to thus determined conditions are contained in embodiments of the present invention. By separating solid product from the liquid obtained by the reaction (1), washing the solid product with water and further alcohol, and drying the solid product at 30-40°C for 6-24 hours, tubular material of which skeleton component is noble metal element can be obtained. It was found that the tubular material has a tubular structure of about 6 nm in outer diameter, 3 nm in inner diameter, and about 1.5 nm in thickness.

### INDUSTRIAL APPLICABILITY

Since noble metal nanotube of the present invention has the aforementioned structure, the present invention is expected to exhibit the following effects.
1) When the nanotube of platinum group or platinum alloy group such as platinum/ruthenium is used as a fuel cell catalyst for extracting electrical energy and heat by reaction between hydrogen and oxygen, the effect from nanostructure with very thin and broad specific surface and the effect from unique configuration act synergically so as to exhibit catalyst effect significantly higher than that of conventional materials so that significant reduction in required amount of catalyst can be expected.
2) When the nanotube is used as a catalyst for purifying automotive exhaust, petroleum chemistry, production of synthetic gas, or manufacturing medicines/fatty oil, significantly higher catalyst effect can be exhibited so that significant effects such as improvement of environment and energy savings in manufacturing process can be expected.
3) When the nanotube is used as an electrode for electrolysis or the like, dramatic increase in reaction efficiency can be expected because the electrode has electrode surface significantly greater than that of conventional materials.
4) When the nanotube is used as a sensor or a shape-memory sensor for detecting temperature, pressure, humidity, dew condensation, flow rate, wind velocity, light, gas, oxygen concentration or displacement, dramatically improved detecting accuracy or sensitivity is exhibited, thereby achieving reduction in size and improvement of element device.
5) When the nanotube is used as paste, conductive paste, resistance paste, or the like having sintering temperature dramatically lower than that of conventional materials can be obtained.
6) When the nanotube is used as an electric wiring material, an electrical resistive material, or a capacitor, an electronic circuit which is dramatically fine as compared to conventional material can be manufactured.
7) When the nanotube is used as permanent magnet, hollow tubular super fine magnet to be used for a micromachine can be provided.
8) When the nanotube is used as a component of a microreactor, a reactor having excellent corrosion resistance, oxidation resistance, catalyst property suitable for respective reaction, electrochemical characteristics, or size selectivity for allowing only molecules or ions having outer diameter of 2-4 nm or less to enter into the inside of the tube can be provided.
9) When the nanotube is used as material separating agent, only molecules or ions having outer inner diameter of 2-4 nm or less are allowed to enter into the inside of the tube, thereby facilitating the separation of relatively small material such as endocrine disrupting chemical such as nonyl phenol or phthalate ester or amino acid from high-molecular-weight material such as protein substance. Since the tubular composition has magnetic property, it can exhibit excellent effect of selectively separating inorganic or organic material having magnetic property.

## Claims

1. A noble metal nanotube, wherein the skeleton of noble metal nanotube is made of a single noble metal element selected from the group of gold (Au), silver (Ag), platinum (Pt), palladium (Pd), rhodium (Rh), or iridium (Ir) as noble metal elements and wherein the noble metal nanotube has a tubular form of 5-7 nm in outer diameter, 2-4 nm in inner diameter, 1-2 nm in thickness, and 10 nm or more in length.

2. A noble metal nanotube, wherein the skeleton of the noble metal nanotube is made of an organization in which two or more selected from a group consisting of gold (Au), silver (Ag), platinum (Pt), palladium (Pd), rhodium (Rh), iridium (Ir), and ruthenium (Ru) as noble metal elements are mixed in any proportions and wherein the noble metal nanotube has a tubular form of 5-7 nm in outer diameter, 2-4 nm in inner diameter, 1-2 nm in thickness, and 10 nm or more in length.

3. A noble metal nanotube, wherein the skeleton of the noble metal nanotube is made of an organization in which one or more elements selected from a group consisting of gold (Au), silver (Ag), platinum (Pt), palladium (Pd), rhodium (Rh), iridium (Ir), and ruthenium (Ru) and one or more elements selected from a group of base metals such as nickel (Ni) are mixed in any proportions and wherein the noble metal nanotube has a tubular form of 5-7 nm in outer diameter, 2-4 nm in inner diameters 1-2 nm in thickness, and 10 nm or more in length.

4. A producing method of a noble metal nanotube as claimed in claim 1, wherein the skeleton of the noble metal nanotube is made of a single noble metal element selected from the group of gold (Au), silver (Ag), platinum (Pt), palladium (Pd), rhodium (Rh), or iridium (Ir) as noble metal elements and the noble metal nanotube has a tubular form of 5-7 nm in outer diameter, 2-4 nm in inner diameter, 1-2 nm in thickness, and 10 nm or more in length, the method comprising preparing a reaction mixture of one metal salt or metal complex compound selected from a group of noble metal salts and noble metal complex compounds such as nitrate salts, chlorides, and metal oxides of gold (Au), silver (Ag), platinum (Pt), palladium (Pd), rhodium (Rh), and iridium (Ir) as noble metal elements; two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotubue, and collecting the noble metal nanotube.

5. A producing method of a noble metal nanotube as claimed in claim 2, wherein the skeleton of the noble metal nanotube is made of an organization in which two or more selected from a group consisting of gold (Au), silver (Ag), platinum (Pt), palladium (Pd), rhodium (Rh), iridium (Ir), and ruthenium (Ru) as noble metal elements are mixed in any proportions and the noble metal nanotube has a tubular form of 5-7 nm in outer diameter, 2-4 nm in inner diameter, 1-2 nm in thickness, and 10 nm or more in length, the method comprising preparing a reaction mixture of two or more metal salts or metal complex compounds selected from a group of noble metal salts and noble metal complex compounds such as nitrate salts, chlorides, and metal oxides of gold (Au), silver (Ag), platinum (Pt), palladium (Pd), rhodium (Rh), iridium (Ir), and ruthenium (Ru) as noble metal elements; two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotube, and collecting the noble metal nanotube.

6. A producing method of a noble metal nanotube as claimed in claim 3, wherein the skeleton of the noble metal nanotube is made of an organization in which one or more noble metal elements selected from a group consisting of gold (Au), silver (Ag), platinum (Pt), palladium (Pd), rhodium (Rh), iridium (Ir), and ruthenium (Ru) and one or more elements selected from a group of base metals such as nickel (Ni) are mixed in any proportions and the noble metal nanotube has a tubular form of 5-7 nm in outer diameter, 2-4 nm in inner diameter, 1-2 nm in thickness, and 10 nm or more in length, the method comprising preparing a reaction mixture of one or more metal salts or metal complex compounds selected from a group of noble metal salts and noble metal complex compounds such as nitrate salts, chlorides, and metal oxides of gold (Au), silver (Ag), platinum (Pt), palladium (Pd), rhodium (Rh), iridium (Ir), and ruthenium (Ru) as noble metal elements; one or more base metal salts selected from a group of metal salts such as nitrate salts and chlorides of base metal elements such as nickel (Ni); two kinds of nonionic surfactants or one kind of nonionic surfactant and one kind of ionic surfactant i.e. two kinds of surfactants selected from a group consisting of polyoxyethylene alkyl ethers such as nonaethylene glycol monohexadecyl ether, polyoxyethylene fatty acid esters, organic sodium sulfates such as sodium dodecyl sulfate and sodium dodecylbenzenesulfonat, alkylammonium salts such as hexadecyltrimethylammonium bromide, polyoxyethylene sorbitan ester such as polyoxyethylene sorbitan monostearate, polyoxyethylene alkyl phenyl ether, and polyoxyethylene polyoxypropylene block polymer; and water, or preparing a reaction mixture, in addition to the above reaction mixture, containing both or either of acid such as nitric acid and alcohol such as dodecyl alcohol and, after that, adding reducing agent such as hydrazine into the reaction mixture or irradiating the reaction mixture with light to cause reaction so as to produce the noble metal nanotube, and collecting the noble metal nanotube.

7. A functional material containing one or more noble metal nanotube(s) as stated in claims 1 through 3, wherein the functional material is used for applications based on the properties of the noble metal nanotube(s).

8. A functional material as claimed in claim 7, wherein the functional material is mainly used for application as a catalyst for fuel cell, automobile exhaust, or the like.

9. A functional material as claimed in claim 7, wherein the functional material is mainly used for application as an electrode for electrolysis or the like.

10. A functional material as claimed in claim 7, wherein the functional material is mainly used for application as a sensor or a shape-memory sensor for detecting temperature, pressure, humidity, dew condensation, flow rate, wind velocity, light, gas, oxygen concentration or displacement.

11. A functional material as claimed in claim 7, wherein the functional material is mainly used for application as paste.

12. A functional material as claimed in claim 7, wherein the functional material is mainly used for application as an electric wiring material, an electrical resistive material, or a capacitor material.

13. A functional material as claimed in claim 7, wherein the functional material is mainly used for application as permanent magnet.

14. A functional material as claimed in claim 7, wherein the functional material is mainly used for application as a component of a microreactor.

15. A functional material as claimed in claim 7, wherein the functional material is mainly used for application as a substance-storing material.

## Patentansprüche

1. Edelmetallnanoröhre wobei das Gerüst der Edelmetallnanoröhre aus einem einzigen, unter Gold (Au), Silber (Ag), Platin (Pt), Palladium (Pd), Rhodium (Rh) oder Iridium (Ir) ausgewählten Edelmetallelement besteht, und wobei die Edelmetallnanoröhre eine Röhrenform von 5-7 nm Außendurchmesser, 2-4 nm Innendurchmesser, 1-2 nm Dicke und mindestens 10 nm Länge aufweist.

2. Edelmetallnanoröhre, wobei das Gerüst der Edelmetallnanoröhre aus einem Aufbau besteht, in dem zwei oder mehrere Edelmetallelemente, die aus einer Gruppe ausgewählt sind, die aus Gold (Au), Silber (Ag), Platin (Pt), Palladium (Pd), Rhodium (Rh), Iridium (Ir) und Ruthenium (Ru) besteht, in beliebigen Verhältnissen miteinander vermischt sind, und wobei die Edelmetallnanoröhre eine Röhrenform von 5-7 nm Außendurchmesser, 2-4 nm Innendurchmesser, 1-2 nm Dicke und mindestens 10 nm Länge aufweist.

3. Edelmetallnanoröhre, wobei das Gerüst der Edelmetallnanoröhre aus einem Aufbau besteht, in dem ein oder mehrere Elemente, ausgewählt aus der Gruppe die aus Gold (Au), Silber (Ag), Platin (Pt), Palladium (Pd), Rhodium (Rh), Iridium (Ir) und Ruthenium (Ru) besteht, und ein oder mehrere Elemente, die aus einer Gruppe unedler Metalle, wie z. B. Nickel (Ni), ausgewählt sind, in beliebigen Verhältnissen miteinander vermischt sind, und wobei die Edelmetallnanoröhre eine Röhrenform von 5-7 nm Außendurchmesser, 2-4 nm Innendurchmesser, 1-2 nm Dicke und mindestens 10 nm Länge aufweist.

4. Herstellungsverfahren für eine Edelmetallnanoröhre nach Anspruch 1, wobei das Gerüst der Edelmetallnanoröhre aus einem einzigen, unter Gold (Au), Silber (Ag), Platin (Pt), Palladium (Pd), Rhodium (Rh) oder Iridium (Ir) ausgewählten Edelmetallelement besteht und die Edelmetallnanoröhre eine Röhrenform von 5-7 nm Außendurchmesser, 2-4 nm Innendurchmesser, 1-2 nm Dicke und mindestens 10 nm Länge aufweist, wobei das Verfahren aufweist: Herstellen eines Reaktionsgemischs aus einem Metallsalz oder einer Metallkomplexverbindung, ausgewählt aus einer Gruppe von Edelmetallsalzen und Edelmetallkomplexverbindungen, wie zum Beispiel Nitratsalzen, Chloriden und Metalloxiden von Gold (Au), Silber (Ag), Platin (Pt), Palladium (Pd), Rhodium (Rh) und Iridium (Ir) als Edelmetallelementen; zwei nichtionischen Tensidarten oder einer nichtionischen Tensidart und einer ionischen Tensidart, d. h. zwei Tensidarten, die aus der Gruppe ausgewählt sind, die aus Polyoxyethylenalkylethern, wie z. B. Nonaethylenglycolmonohexadecylether, Polyoxyethylenfettsäureestern, organischen Natriumsulfaten, wie z. B. Natriumdodecylsulfat und Natriumdodecylbenzolsulfonat, Alkylammoniumsalzen, wie z. B. Hexadecyltrimethylammoniumbromid, Polyoxyethylensorbitanester, wie z. B. Polyoxyethylensorbitanmonostearat, Polyoxyethylenalkylphenylether und Polyoxyethylen-Polyoxypropylen-Blockpolymer; und Wasser, oder Herstellen eines Reaktionsgemischs zusätzlich zu dem obigen Reaktionsgemisch, das entweder eine Säure, wie z. B. Salpetersäure, oder einen Alkohol, wie z. B. Dodecylalkohol, oder beides enthält, und danach Zugabe eines Reduktionsmittels, wie z. B. von Hydrazin, zu dem Reaktionsgemisch oder Bestrahlen des Reaktionsgemischs mit Licht, um eine Reaktion zur Erzeugung der Edelmetallnanoröhre herbeizuführen, und Auffangen der Edelmetallnanoröhre.

5. Herstellungsverfahren für eine Edelmetallnanoröhre nach Anspruch 2, wobei das Gerüst der Edelmetallnanoröhre aus einem Aufbau besteht, in dem zwei oder mehrere Edelmetallelemente, die aus einer Gruppe ausgewählt sind, die aus Gold (Au), Silber (Ag), Platin (Pt), Palladium (Pd), Rhodium (Rh), Iridium (Ir) und Ruthenium (Ru) besteht, in beliebigen Verhältnissen miteinander vermischt sind, und wobei die Edelmetallnanoröhre eine Röhrenform von 5-7 nm Außendurchmesser, 2-4 nm Innendurchmesser, 1-2 nm Dicke und mindestens 10 nm Länge aufweist, wobei das Verfahren aufweist: Herstellen eines Reaktionsgemischs aus zwei oder mehreren Metallsalzen oder Metallkomplexverbindungen, ausgewählt aus einer Gruppe von Edelmetallsalzen und Edelmetallkomplexverbindungen, wie zum Beispiel Nitratsalzen, Chloriden und Metalloxiden von Gold (Au), Silber (Ag), Platin (Pt), Palladium (Pd), Rhodium (Rh), Iridium (Ir) und Ruthenium (Ru) als Edelmetallelementen; zwei nichtionischen Tensidarten oder einer nichtionischen Tensidart und einer ionischen Tensidart, d. h. zwei Tensidarten, die aus der Gruppe ausgewählt sind, die aus Polyoxyethylenalkylethern, wie z. B. Nonaethylenglycolmonohexadecylether, Polyoxyethylenfettsäureestern, organischen Natriumsulfaten, wie z. B. Natriumdodecylsulfat und Natriumdodecylbenzolsulfonat, Alkylammoniumsalzen, wie z. B. Hexadecyltrimethylammoniumbromid, Polyoxyethylensorbitanester, wie z. B. Polyoxyethylensorbitanmonostearat, Polyoxyethylenalkylphenylether und Polyoxyethylen-Polyoxypropylen-Blockpolymer; und Wasser, oder Herstellen eines Reaktionsgemischs zusätzlich zu dem obigen Reaktionsgemisch, das entweder eine Säure, wie z. B. Salpetersäure, oder einen Alkohol, wie z. B. Dodecylalkohol, oder beides enthält, und danach Zugabe eines Reduktionsmittels, wie z. B. von Hydrazin, zu dem Reaktionsgemisch oder Bestrahlen des Reaktionsgemischs mit Licht, um eine Reaktion zur Erzeugung der Edelmetallnanoröhre herbeizuführen, und Auffangen der Edelmetallnanoröhre.

6. Herstellungsverfahren für eine Edelmetallnanoröhre nach Anspruch 3, wobei das Gerüst der Edelmetallnanoröhre aus einem Aufbau besteht, in dem ein oder mehrere Edelmetallelemente, die aus einer Gruppe ausgewählt sind, die aus Gold (Au), Silber (Ag), Platin (Pt), Palladium (Pd), Rhodium (Rh), Iridium (Ir) und Ruthenium (Ru) besteht, und ein oder mehrere Elemente, ausgewählt aus einer Gruppe unedler Metalle, wie z. B. Nickel (Ni), in beliebigen Verhältnissen miteinander vermischt sind, wobei die Edelmetallnanoröhre eine Röhrenform von 5-7 nm Außendurchmesser, 2-4 nm Innendurchmesser, 1-2 nm Dicke und mindestens 10 nm Länge aufweist, wobei das Verfahren aufweist: Herstellen eines Reaktionsgemischs aus einem oder mehreren Metallsalzen oder Metallkomplexverbindungen, ausgewählt aus einer Gruppe von Edelmetallsalzen und Edelmetallkomplexverbindungen, wie zum Beispiel Nitratsalzen, Chloriden und Metalloxiden von Gold (Au), Silber (Ag), Platin (Pt), Palladium (Pd), Rhodium (Rh), Iridium (Ir) und Ruthenium (Ru) als Edelmetallelementen; einem oder mehreren Salzen unedler Metallelemente, ausgewählt aus einer Gruppe von Metallsalzen wie z. B. Nitratsalzen und Chloriden von unedlen Metallelementen, wie z. B. Nickel, zwei nichtionischen Tensidarten oder einer nichtionischen Tensidart und einer ionischen Tensidart, d. h. zwei Tensidarten, die aus der Gruppe ausgewählt sind, die aus Polyoxyethylenalkylethern, wie z. B. Nonaethylenglycolmonohexadecylether, Polyoxyethylenfettsäureestern, organischen Natriumsulfaten, wie z. B. Natriumdodecylsulfat und Natriumdodecylbenzolsulfonat, Alkylammoniumsalzen, wie z. B. Hexadecyltrimethylammoniumbromid, Polyoxyethylensorbitanester, wie z. B. Polyoxyethylensorbitanmonostearat, Polyoxyethylenalkylphenylether und Polyoxyethylen-Polyoxypropylen-Blockpolymer; und Wasser, oder Herstellen eines Reaktionsgemischs zusätzlich zu dem obigen Reaktionsgemisch, das entweder eine Säure, wie z. B. Salpetersäure, oder einen Alkohol, wie z. B. Dodecylalkohol, oder beides enthält, und danach Zugabe eines Reduktionsmittels, wie z. B. von Hydrazin, zu dem Reaktionsgemisch oder Bestrahlen des Reaktionsgemischs mit Licht, um eine Reaktion zur Erzeugung der Edelmetallnanoröhre herbeizuführen, und Auffangen der Edelmetallnanoröhre.

7. Funktionsmaterial, das eine oder mehrere Edelmetallnanoröhre(n) nach einem der Ansprüche 1 bis 3 enthält wobei das Funktionsmaterial für Anwendungen eingesetzt wird, die auf den Eigenschaften der Edelmetallnanoröhre(n) basieren.

8. Funktionsmaterial nach Anspruch 7, wobei das Funktionsmaterial hauptsächlich zur Anwendung als Katalysator für eine Brennstoffzelle, einen Kraftfahrzeugauspuff oder dergleichen eingesetzt wird.

9. Funktionsmaterial nach Anspruch 7, wobei das Funktionsmaterial hauptsächlich zur Anwendung als Elektrode für Elektrolyse oder dergleichen eingesetzt wird.

10. Funktionsmaterial nach Anspruch 7, wobei das Funktionsmaterial hauptsächlich zur Anwendung als Sensor oder als Sensor mit Formgedächtnis zur Erfassung von Temperatur, Druck, Feuchtigkeit, Taukondensation, Durchflußgeschwindigkeit, Windgeschwindigkeit, Licht, Gas, Sauerstoffkonzentration oder Verschiebung eingesetzt wird.

11. Funktionsmaterial nach Anspruch 7, wobei das Funktionsmaterial hauptsächlich zur Anwendung als Paste eingesetzt wird.

12. Funktionsmaterial nach Anspruch 7, wobei das Funktionsmaterial hauptsächlich zur Anwendung als elektrisches Leitungsmaterial, elektrisches Widerstandmaterial oder als Kondensator material eingesetzt wird.

13. Funktionsmaterial nach Anspruch 7, wobei das Funktionsmaterial hauptsächlich zur Anwendung als Dauermagnet eingesetzt wird.

14. Funktionsmaterial nach Anspruch 7, wobei das Funktionsmaterial hauptsächlich zur Anwendung als Komponente eines Mikroreaktors eingesetzt wird.

15. Funktionsmaterial nach Anspruch 7, wobei das Funktionsmaterial hauptsächlich zur Anwendung als Substanzspeichermaterial eingesetzt wird.

## Revendications

1. Nanotube en métal noble dans lequel le squelette du nanotube en métal noble est constitué d'un seul élément de métal noble sélectioné dans le groupe de l'or (Au), l'argent (Ag), le platine (Pt), le palladium (Pd), le rhodium (Rh) ou l'iridium (Ir) en tant qu'éléments de métaux nobles et dans lequel le nanotube en métal noble présente une forme tubulaire de 5 à 7 nm de diamètre externe, de 2 à 4 nm de diamètre interne, de 1 à 2 nm d'épaisseur et de 10 nm ou plus de longueur.

2. Nanotube en métal noble dans lequel le squelette du nanotube en métal noble est constitué d'une organisation dans laquelle deux éléments ou plus, sélectionnés dans un groupe constitué de l'or (Au), l'argent (Ag), le platine (Pt), le palladium (Pd), le rhodium (Rh), l'iridium (Ir) et le ruthénium (Ru) en tant qu'éléments de métaux nobles sont mélangés dans des proportions quelconques et dans lequel le nanotube en métal noble présente une forme tubulaire de 5 à 7 nm de diamètre externe, de 2 à 4 nm de diamètre interne, de 1 à 2 nm d'épaisseur et de 10 nm ou plus de longueur.

3. Nanotube en métal noble dans lequel le squelette du nanotube en métal noble est constitué d'une organisation dans laquelle un ou plusieurs éléments, sélectionnés dans un groupe constitué de l'or (Au), l'argent (Ag) le platine (Pt), le palladium (Pd), le rhodium (Rh), l'iridium (lr) et le ruthénium (Ru) et un ou plusieurs éléments, sélectionnés dans un groupe de métaux de base tels que le nickel (Ni) sont mélangés dans des proportions quelconques et dans lequel le nanotube en métal noble présente une forme tubulaire de 5 à 7 nm de diamètre externe, de 2 à 4 nm de diamètre interne, de 1 à 2 nm épaisseur et de 10 nm ou plus de longueur.

4. Procédé de fabrication d'un nanotube en métal noble selon la revendication 1, dans lequel le squelette du nanotube en métal noble est constitué d'un seul élément de métal noble sélectionné dans le groupe de l'or (Au), l'argent (Ag), le platine (Pt), le palladium (Pd), le rhodium (Rh) ou l'iridium (Ir) en tant que éléments de métaux nobles et dans lequel le nanotube en métal noble présente une forme tubulaire de 5 à 7 nm de diamètre externe, de 2 à 4 nm de diamètre interne, de 1 à 2 nm d'épaisseur et de 10 nm ou plus de longueur, ce procédé comprenant la préparation d'un mélange de réaction constitué d'un sel métallique ou d'un composé métallique complexe sélectionné dans un groupe de sels métaux nobles et de composés complexes de métaux nobles tels que des sels de nitrates, des chlorures et des oxydes métalliques d'or (Au), d'argent (Ag), de platine (Pt), de palladium (Pd), de rhodium (Rh) et d'iridium (Ir) en tant qu'éléments de métaux nobles ; deux types de tensioactifs non ioniques ou un type de tensioactif non ionique et un type de tensioactif ionique c'est-à-dire deux types de tensioactifs sélectionnés dans un groupe constitué de polyoxyéthylènealkyléthers tels que le nonaéthylèneglycolmonohexadécyléther, d'esters d'acides gras de polyoxyéthylène, de sulfates de sodium organiques tels que le dodécylsulfate de sodium et le dodécylbenzènesulfonate de sodium, des sels d'alkylammonium tels que le bromure d'hexadécyltriméthylammonium, un ester de sorbitan de polyoxyéthylène tel que le monostéarate de sorbitan de polyoxyéthylène, le polyoxyéthylènealkylphényléther et un polymère séquencé de polyoxyéthylène-polyoxypropylène et de l'eau, ou la préparation d'un mélange de réaction en plus du mélange de réaction mentionné ci-dessus, contenant un acide tel que l'acide nitrique et/ou un alcool tel que l'alcool dodécylique, et ensuite l'ajout d'un agent réducteur tel que l'hydrazine dans le mélange de réaction ou l'irradiation du mélange de réaction avec de la lumière afin de provoquer une réaction pour produire le nanotube en métal noble et la récupération du nanotube en métal noble.

5. Procédé de fabrication d'un nanotube en métal noble selon la revendication 2, dans lequel le squelette du nanotube en métal noble est constitué d'une organisation dans laquelle deux éléments ou plus, sélectionnés dans un groupe constitué de l'or (Au), l'argent (Ag), ie platine (Pt), le palladium (Pd), le rhodium (Rh), l'iridium (Ir) et le ruthénium (Ru) en tant qu'éléments de métaux nobles sont mélangés dans des proportions quelconques et dans lequel le nanotube en métal noble présente une forme tubulaire de 5 à 7 nm de diamètre externe, de 2 à 4 nm de diamètre interne, de 1 à 2 nm d'épaisseur et de 10 nm ou plus de longueur, ce procédé comprenant la préparation d'un mélange de réaction constitué de deux sels métalliques ou composés métalliques complexes ou plus sélectionnés dans un groupe de sels de métaux nobles et de composés complexes de métaux nobles tels que des sels de nitrates, des chlorures et des oxydes métalliques d'or (Au), d'argent (Ag), de platine (Pt), de palladium (Pd), de rhodium (Rh), d'iridium (Ir) et de ruthénium (Ru) en tant qu'éléments de métaux nobles ; deux types de tensioactifs non ioniques ou un type de tensioactif non ionique et un type de tensioactif ionique c'est-à-dire deux types de tensioactifs sélectionnés dans un groupe constitué de polyoxyéthylènealkyléthers tels que le nonaéthylèneglycolmonohexadécyléther, d'esters d'acides gras de polyoxyéthylène, de sulfates de sodium organiques tels que le dodécylsulfate de sodium et le dodécylbenzènesulfonate de sodium, des sels d'alkylammonium tels que le bromure d'hexadécyltriméthylammonium, un ester de sorbitan de polyoxyéthylène tel que le monostéarate de sorbitan de polyoxyéthylène, le polyoxyéthylènealkylphényléther et un polymère séquencé de polyoxyéthylène-polyoxypropylène et de l'eau, ou la préparation d'un mélange de réaction en plus du mélange de réaction mentionné ci-dessus, contenant un acide tel que l'acide nitrique et/ou un alcool tel que l'alcool dodécylique, et ensuite l'ajout d'un agent réducteur tel que l'hydrazine dans le mélange de réaction ou l'irradiation du mélange de réaction avec de la lumière afin de provoquer une réaction pour produire le nanotube en métal noble et la récupération du nanotube en métal noble.

6. Procédé de fabrication d'un nanotube en métal noble selon la revendication 3, dans lequel le squelette du nanotube en métal noble est constitué d'une organisation dans laquelle un ou plusieurs éléments de métaux nobles, sélectionnés dans un groupe constitué de l'or (Au), l'argent (Ag), le platine (Pt), le palladium (Pd), le rhodium (Rh), l'iridium (Ir) et le ruthénium (Ru) et un ou plusieurs éléments, sélectionnés dans un groupe de métaux de base tels que le nickel (Ni) sont mélangés dans des proportions quelconques et dans lequel le nanotube en métal noble présente une forme tubulaire de 5 à 7 nm de diamètre externe, de 2 à 4 nm de diamètre interne, de 1 à 2 nm d'épaisseur et de 10 nm ou plus de longueur, ce procédé comprenant la préparation d'un mélange de réaction constitué d'un ou plusieurs sels métalliques ou composés métalliques complexes sélectionnés dans un groupe de sels de métaux nobles et de composés complexes de métaux nobles tels que des sels de nitrates, des chlorures et des oxydes métalliques d'or (Au), d'argent (Ag), de platine (Pt), de palladium (Pd), de rhodium (Rh), d'iridium (lr) et de ruthénium (Ru) en tant qu'éléments de métaux nobles ; un ou plusieurs sels métalliques de base sélectionnés dans un groupe de sels métalliques tels que des sels de nitrates et des chlorures d'éléments métalliques de base tels que le nickel (Ni) ; deux types de tensioactifs non ioniques ou un type de tensioactif non ionique et un type de tensioactif ionique, c'est-à-dire deux types de tensioactifs sélectionnés dans un groupe constitué de polyoxyéthylènealkyléthers tels que le nonaéthylèneglycolmonohexadécyléther, d'esters d'acides gras de polyoxyéthylène, de sulfates de sodium organiques tels que le dodécylsulfate de sodium et le dodécylbenzènesulfonate de sodium, des sels d'alkylammonium tels que le bromure d'hexadécyltriméthylammonium, un ester de sorbitan de polyoxyéthylène tel que le monostéarate de sorbitan de polyoxyéthylène, le polyoxyéthylènealkylphényléther et un polymère séquencé de polyoxyéthylène-polyoxypropylène et de l'eau, ou la préparation d'un mélange de réaction en plus du mélange de réaction mentionné ci-dessus, contenant un acide tel que l'acide nitrique et/ou un alcool tel que l'alcool dodécylique, et ensuite l'ajout d'un agent réducteur tel que l'hydrazine dans le mélange de réaction ou l'irradiation du mélange de réaction avec de la lumière afin de provoquer une réaction pour produire le nanotube en métal noble et la récupération du nanotube en métal noble.

7. Matériau fonctionnel contenant un ou plusieurs nanotubes en métal noble, selon les revendications 1 à 3, dans lequel le matériau fonctionnel est utilisé pour des applications basées sur les propriétés du ou des nanotubes en métal noble.

8. Matériau fonctionnel selon la revendication 7, dans iequei ie matériau fonctionnel est utilisé principalement pour une application en tant que catalyseur pour une cellule à combustible, l'échappement d'un véhicule ou autres.

9. Matériau fonctionnel selon la revendication 7, dans lequel le matériau fonctionnel est utilisé principalement pour une application en tant qu'électrode pour une électrolyse ou autres.

10. Matériau fonctionnel selon la revendication 7, dans lequel le matériau fonctionnel est utilisé principalement pour une application en tant que capteur ou capteur à mémoire de forme afin de détecter une température, une pression, de l'humidité, de la condensation de rosée, un débit, la vitesse du vent, de la lumière, un gaz, la concentration en oxygène ou un déplacement.

11. Matériau fonctionnel selon la revendication 7, dans lequel le matériau fonctionnel est utilisé principalement pour une application sous la forme d'une pâte.

12. Matériau fonctionnel selon la revendication 7, dans lequel le matériau fonctionnel est utilisé principalement pour une application en tant que matériau de câblage électrique, matériau électriquement résistant ou matériau de condensateur.

13. Matériau fonctionnel selon la revendication 7, dans lequel le matériau fonctionnel est utilisé principalement pour une application en tant qu'aimant permanent.

14. Matériau fonctionnel selon la revendication 7, dans lequel le matériau fonctionnel est utilisé principalement pour une application en tant que composant d'un micro-réacteur.

15. Matériau fonctionnel selon la revendication 7, dans lequel le matériau fonctionnel est utilisé principalement pour une application en tant que matériau de stockage d'une substance.
